# EUROPÄISCHE PATENTSCHRIFT

(11) **EP 1 238 318 B1**
(45) Veröffentlichungstag und Bekanntmachung des Hinweises auf die Patenterteilung: **16.07.2003**
(21) Anmeldenummer: 00989773.7
(22) Anmeldetag: 14.11.2000
(51) Int. Cl.: G05B 19/414, G05B 19/042

(54) **AUTOMATISIERUNGSGERÄT UND AUFDAT-VERFAHREN**
AUTOMATION DEVICE AND UPDATING METHOD
AUTOMATE PROGRAMMABLE ET PROCEDE D'ACTUALISATION

(30) Priorität: 15.11.1999 DE 19955073; 23.11.1999 DE 19956271
(43) Veröffentlichungstag der Anmeldung: 11.09.2002
(73) Patentinhaber: SIEMENS AKTIENGESELLSCHAFT, 80333 München (DE)
(72) Erfinder: BARTHEL, Herbert, 91074 Herzogenaurach (DE); LAFORSCH, Jürgen, 77815 Bühl (DE); LUBER, Ralph, 76437 Rastatt (DE); RITZER, Josef, 76149 Karlsruhe (DE)
(86) Internationale Anmeldenummer: DE0004002
(87) Internationale Veröffentlichungsnummer: WO01037058

(56) Entgegenhaltungen:
- EP-A- 0 460 308
- EP-A- 0 636 956

## Beschreibung

Die Erfindung betrifft ein Automatisierungsgerät zur Steuerung und/oder Überwachung eines technischen Prozesses, mit einem Speicher zur Speicherung zumindest eines Anwenderprogramms mit mindestens einer Task sowie prozess- und anwenderprogrammbezogener Daten, wobei beim Ankoppeln eines redundanten Automatisierungsgerätes ein Transfer des Inhalts des Speichers in einen Speicher des redundanten Automatisierungsgerätes erfolgt. Sie betrifft weiter ein Verfahren zum Aufdaten eines mit einem solchen Automatisierungsgerät kommunikativ verbundenen redundanten Automatisierungsgerätes.

Eine Speicherprogrammierbare Steuerung (SPS) ist eine weit verbreitete, spezielle Realisierung eines zum Einzelbetrieb und damit zum nicht-redundanten Betrieb geeigneten Automatisierungsgerätes. Auch kann ein so genannter Prozessrechner oder auch ein so genannter Personal Computer, der im Vergleich zu einem für einen reinen Büro-Einsatz vorgesehenen Personal Computer insbesondere um ein spezielles Netzteil, um eine spezielle Abschirmung, um einen gepufferten Speicher und/oder um eine unterbrechungsfreie Stromversorgung ergänzt ist, als Automatisierungsgerät eingesetzt werden.

Grundsätzlich umfasst das Automatisierungsgerät, wie jeder "Standardcomputer", zumindest einen Prozessor zum Ausführen eines in einem Speicher hinterlegten Anwenderprogramms. Die Besonderheit des Automatisierungsgerätes im Vergleich zu einem Standardcomputer liegt darin, dass das Automatisierungsgerät Mittel zur Anbindung an einen zu steuernden und/oder zu überwachenden Prozess aufweist, insbesondere Ein-/Ausgabevorrichtungen, wie z.B. Digital-/Analogeingabeschnittstellen bzw. Digital-/Analogausgabeschnittstellen.

Ein Automatisierungsgerät, das im Gegensatz zu dem für den Einzelbetrieb vorgesehenen Automatisierungsgerät zum redundanten Betrieb mit mindestens einem redundanten Automatisierungsgerät - im folgenden auch als Backupautomatisierungsgerät bezeichnet - geeignet ist, unterscheidet sich von diesem zumindest durch eine Vorrichtung zur kommunikativen Verbindung mit dem zugeordneten redundanten Automatisierungsgerät. Bei einer derartigen Vorrichtung handelt es sich üblicherweise um eine Schnittstelle, z.B. um eine serielle/parallele Schnittstelle oder eine Busschnittstelle, die das Herstellen einer Kommunikationsverbindung mit dem zugeordneten redundanten Automatisierungsgerät ermöglicht. Derartige, zum redundanten Betrieb geeignete Automatisierungsgeräte sind z.B. aus der EP 0 497 147, der EP 0 636 956 oder der DE 196 24 302 bekannt.

Aus der EP 0 497 147 ist ein redundant aus zwei Teilgeräten aufgebautes Automatisierungsgerät bekannt. Jedes der Teilgeräte weist eine Zentraleinheit und einen Speicher sowie einen Kommunikationsprozessor auf, wobei die beiden Kommunikationsprozessoren über eine Kommunikationsleitung miteinander verbunden sind. Die beiden Teilgeräte führen identische Anwenderprogramme aus und tauschen über die Kommunikationsleitung zur Gewährleistung einer synchronen Abarbeitung der identischen Anwenderprogramme Synchronisationsdaten aus.

Aus der EP 0 636 956 ist ebenfalls ein zwei Teilsysteme, nämlich ein Anfangs- und ein Zusatzautomatisierungssystem, aufweisendes Automatisierungssystem bekannt. Beim Ausfall eines der Teilsysteme wird der technische Prozess durch das verbleibende Teilsystem, das Anfangsautomatisierungssystem, geführt. Nach dem Austausch des ausgefallenen Teilsystems muss dieses, nämlich das Zusatzautomatisierungssystem, wieder an das Anfangsautomatisierungssystem angekoppelt werden. Dazu weist sowohl das Anfangs- wie auch das Zusatzautomatisierungssystem eine Kommunikationsschnittstelle auf, mittels derer die beiden Teilsysteme kommunikativ verbindbar sind. Über diese Kommunikationsverbindung wird der Inhalt des Speichers des Anfangsautomatisierungssystems in den Speicher des Zusatzautomatisierungssystems transferiert. Dieser Transfer erfolgt unter Beibehaltung der Steuerung des technischen Prozesses durch das Anfangsautomatisierungssystem, indem entweder der Transfer während eines zeitunkritischen Zustands des Anfangsautomatisierungssystems oder sukzessive in sogenannten Zeitscheiben erfolgt.

Der Transfer des Inhalts des Speichers des ersten Gerätes/-Teilsystems in den Speicher des redundanten zweiten Gerätes/-Teilsystems wird auch als "Aufdaten" bezeichnet. So ist z.B. aus der DE 196 24 302 ein Verfahren zum Aufdaten (Aufdatverfahren) bekannt, mit dem einem z.B. aufgrund von Wartungsarbeiten vorübergehend stillgelegten Zusatzautomatisierungssystem der aktuelle Datenbestand des Anfangsautomatisierungssystems übermittelt wird.

Das bekannte Aufdatverfahren ist in zwei Durchläufe unterteilt. In einem ersten Durchlauf wird der Inhalt des Speichers des Anfangsautomatisierungssystems durch sukzessives Auslesen aus dem Speicher des Anfangsautomatisierungssystems und Einschreiben in den Speicher des Zusatzautomatisierungssystems übertragen. Der Umfang der dabei in einem Schritt ausgelesenen bzw. eingeschriebenen Daten wird durch die für diesen Vorgang benötigte Zeitspanne und die in Bezug auf den zu steuernden Prozess maximal tolerierbare Latenzphase des Anfangsautomatisierungssystems bestimmt. Nach einer bestimmten Anzahl solcher Schreib- und Lesevorgänge ist ein Transfer eines "Grunddatenbestandes" des Anfangsautomatisierungssystems an das Zusatzautomatisierungssystem erfolgt. Während dieser Zeit sind jedoch die Daten im Speicher des Anfangsautomatisierungssystems aufgrund der nicht unterbrochenen Steuerung des technischen Prozesses einer kontinuierlichen Veränderung unterworfen. Diese zwischenzeitlich geänderten Speicherinhalte werden in einem weiteren Durchlauf übertragen. Dazu werden beim Einschreiben von neuen und/oder geänderten Daten in den Speicher des Anfangsautomatisierungssystems dieselben Daten zusammen mit einer Positionsinformation auch in einen Zwischenspeicher geschrieben und im zweiten Durchlauf wird der Inhalt des Zwischenspeichers unter Auswertung der Positionsinformationen in den Speicher des Zusatzautomatisierungssystems übertragen.

Der Erfindung liegt die Aufgabe zugrunde, ein zum redundanten Betrieb geeignetes Automatisierungsgerät anzugeben, mit dem ein Aufdaten eines redundanten Automatisierungsgerätes oder Backupautomatisierungsgerätes besonders effizient und ohne merkliche Störung der fortgesetzten Steuerung des technischen Prozesses sowie ohne zusätzlichen Hardwareaufwand ermöglicht ist. Des Weiteren soll ein besonders geeignetes Verfahren zum Aufdaten eines mit einem solchen Automatisierungsgerät kommunikativ verbundenen redundanten Automatisierungsgerätes angegeben werden.

Bezüglich des Automatisierungsgerätes wird diese Aufgabe erfindungsgemäß gelöst durch die Merkmale des Anspruchs 1. Vorteilhafte Ausgestaltungen sind Gegenstand der auf diesen rückbezogenen Unteransprüche.

Bezüglich des Aufdatverfahrens wird die genannte Aufgabe erfindungsgemäß gelöst durch die Merkmale des Anspruchs 4. Zweckmäßige Weiterbildungen sind Gegenstand der auf diesen rückbezogenen Unteransprüche.

Die mit der Erfindung erzielten Vorteile bestehen insbesondere darin, dass einerseits zum Aufdaten die Steuerung und/oder Überwachung des technischen Prozesses nicht unterbrochen werden muss, und dass andererseits auch während der fortgesetzten Steuerung und/oder Überwachung des technischen Prozesses Reaktionszeitobergrenzen, d.h. Zeitspannen, innerhalb derer auf eine Veränderung im Zustand des Prozesses reagiert wird, eingehalten werden, indem eine Aufdattask terminiert wird, die zusammen mit der dieser zugeordneten Task des Anwenderprogramms zuviel Laufzeit beansprucht. Sobald die Aufdattask terminiert wurde, ist hinsichtlich der Steuerung und/oder Überwachung des technischen Prozesses wieder die Konstellation hergestellt, die ohne das Erfordernis des Aufdatens bestände, so dass wieder entsprechend der Möglichkeiten des Anwenderprogramms auf Zustandsänderungen des technischen Prozesses reagiert werden kann.

Das im Speicher abgelegte und von einem Prozessor ausgeführte Anwenderprogramm des Automatisierungsgeräts umfasst zumindest eine sogenannte Task, d.h. eine Ablaufeinheit des Anwenderprogramms, deren Ablauf (Reihenfolge, Dauer) vom sogenannten Scheduler des Betriebssystems bestimmt wird. Zusätzlich zum Anwenderprogramm sind im Speicher des Automatisierungsgerätes auch prozess- und anwenderprogrammbezogene Daten, z.B. Prozesszustände und Variable des Anwenderprogramms, gespeichert.

Beim Ankoppeln des Backupautomatisierungsgerätes, z.B. nach Abschluss von Wartungsarbeiten am Backupautomatisierungsgerät, ist ein Transfer des Inhalts des Speichers des Automatisierungsgerätes in den Speicher des Backupautomatisierungsgerätes vorgesehen (Aufdaten). Dabei erfolgt dieser Transfer während des Betriebs des Automatisierungsgerätes, also während der ununterbrochenen Steuerung des technischen Prozesses durch das Automatisierungsgerät.

Das Aufdatverfahren ist in zwei Durchläufe unterteilt. In einem ersten Durchlauf wird - analog zum aus der DE 196 24 302 bekannten Aufdatverfahren - der Inhalt des Speichers des Automatisierungsgerätes durch sukzessives Auslesen und Einschreiben in den Speicher des Backupautomatisierungsgerätes übertragen. Der Umfang der dabei in einem Schritt ausgelesenen bzw. eingeschriebenen Daten wird durch die für diesen Vorgang benötigte Zeitspanne und die in Bezug auf den zu steuernden Prozess maximal tolerierbare Latenzphase des Automatisierungsgerätes bestimmt. Nach einer bestimmten Anzahl solcher Schreib- und Lesevorgänge ist ein Transfer eines "Grunddatenbestandes" des Automatisierungsgerätes an das Backupautomatisierungsgerät erfolgt. Während dieser Zeit sind jedoch die Daten im Speicher des Automatisierungsgerätes aufgrund der nicht unterbrochenen Steuerung des technischen Prozesses einer kontinuierlichen Veränderung unterworfen. Diese zwischenzeitlich geänderten Speicherinhalte werden in einem weiteren Aufdatdurchlauf übertragen.

Das weitere Aufdaten erfolgt mittels spezieller Aufdattasks, die jeder Task des Anwenderprogramms zum Transfer des Inhalts des Teils des Speichers, auf den die jeweilige Task zugreift, zugeordnet ist, wobei durchaus auch vorgesehen sein kann, dass eine Aufdattask mehreren Tasks des Anwenderprogramms zugeordnet ist. Dabei wird die jeweilige Aufdattask im Anschluss an die Ausführung derjenigen Task, der die Aufdattask zugeordnet ist, ausgeführt. Die Summe der Laufzeit von Task und zugeordneter Aufdattask ist notwendig größer als die Laufzeit der Task selbst.

Damit das Aufdaten ohne merkliche Störung der fortgesetzten Steuerung des technischen Prozesses erfolgen kann, darf erkanntermaßen der Ablauf einer Aufdattask den Start anderer Tasks des Anwenderprogramms allenfalls marginal verzögern. Um dies zu gewährleisten, wird die Summe der Laufzeiten von Task und zugeordneter Aufdattask ermittelt und als Summenlaufzeit erfasst. Überschreitet die erfasste Summenlaufzeit eine vorgegebene oder vorgebbare Laufzeitobergrenze wird die Ausführung der Aufdattask beendet, indem die Aufdattask terminiert wird.

Nachfolgend wird ein Ausführungsbeispiel der Erfindung anhand der Zeichnungen näher erläutert. Darin zeigen:
- FIG 1: schematisch ein Automatisierungssystem mit einem Automatisierungsgerät und einem damit kommunikativ verbundenen redundanten Automatisierungsgerät zur Führung eines technischen Prozesses,
- FIG 2 bis 5: den zeitlichen Ablauf verschiedener Tasks mit jeweils unterschiedlichen Prioritäten eines Anwenderprogramms,
- FIG 6: eine schematische Darstellung des Transfers des Inhalts einzelner Segmente eines Speichers des Automatisierungsgerätes in einen korrespondierenden Speicher des redundanten Automatisierungsgerätes, und
- FIG 7: eine schematische Darstellung des Speicherlayouts des Speichers des Automatisierungsgerätes mit ausgezeichneten Abschnitten/Segmenten, auf die bestimmte Tasks zugreifen.

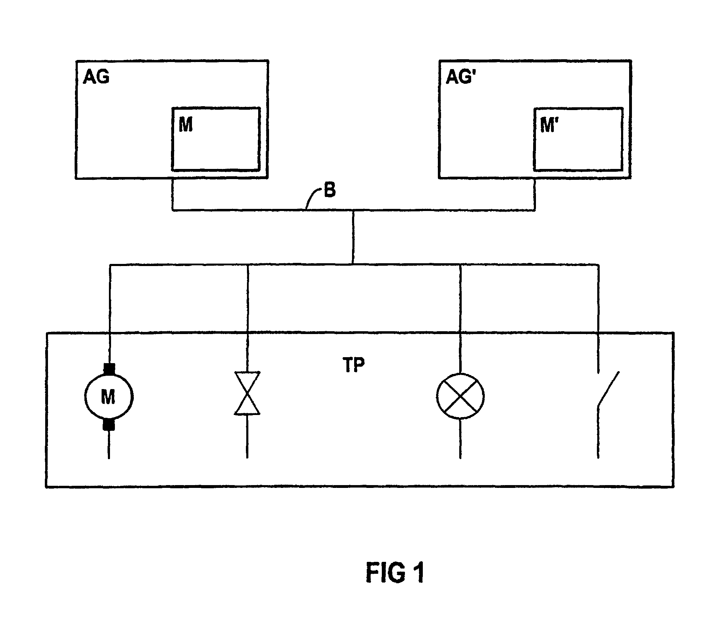

FIG 1 zeigt ein Automatisierungssystem AG, AG' und einen von diesem zu steuernden und/oder zu überwachenden technischen Prozess TP. Das Automatisierungssystem AG, AG' umfasst zumindest ein Automatisierungsgerät AG und ein redundantes Automatisierungsgerät oder Backupautomatisierungsgerät AG'.

Sowohl das Automatisierungsgerät AG als auch das Backupautomatisierungsgerät AG' sind in der Lage, den technischen Prozess TP zu führen. Die Unterscheidung zwischen Automatisierungsgerät AG und Backupautomatisierungsgerät AG' ist als rein sprachliche Unterscheidung anzusehen, die die jeweilige Funktionalität des Gerätes AG, AG' beschreibt. So kann das Backupautomatisierungsgerät AG' eines ersten Aufdatvorgangs das Automatisierungsgerät AG eines zeitlich später liegenden weiteren Aufdatvorgangs sein.

Um Befehle und Steueranweisungen an den technischen Prozess TP zu übermitteln, aber auch um Signale und Prozesswerte von diesem zu empfangen, ist eine kommunikative Verbindung B zwischen den Automatisierungsgeräten AG, AG' und dem technischen Prozess TP vorgesehen. Diese kommunikative Verbindung B ist in FIG 1 exemplarisch als Busverbindung B dargestellt. Die kommunikative Verbindung B mit dem Prozess TP kann auch ganz oder teilweise in Form einer herkömmlichen Verdrahtung bestehen.

Gleichfalls nur aus Gründen der zeichnerischen Vereinfachung stellt die kommunikative Verbindung B, die den Prozessanschluss ermöglicht, auch die kommunikative Verbindung zwischen Automatisierungsgerät AG und Backupautomatisierungsgerät AG' dar. Üblicherweise sind heute gebräuchliche Busverbindungen B derart leistungsfähig, dass sie ausreichend Bandbreite zur Verfügung stellen, um sowohl die interne (Automatisierungsgerät AG, Backupautomatisierungsgerät AG') wie auch die externe ((Backup-)Automatisierungsgerät AG, AG', technischer Prozess TP) Kommunikation abzuwickeln. Es ist jedoch gleichfalls möglich, die interne Kommunikation über einen separaten Bus - beispielsweise einen so genannten Rückwandbus - abzuwickeln, um auf diese Weise ggf. besonders hohe Datentransferraten zu erreichen, so dass das Aufdaten insgesamt beschleunigt erfolgen kann.

Des Weiteren weist jedes Automatisierungsgerät AG, AG' einen Speicher M, M' auf, der zur Speicherung zumindest eines Anwenderprogramms mit mindestens einer Task T1, T2 sowie prozess- und anwenderprogrammbezogener Daten vorgesehen ist.

Nachfolgend wird davon ausgegangen, dass es sich bei den Tasks T1, T2 des Anwenderprogramms um sogenannte zyklische Tasks T1, T2 handelt, die jeweils in einem festen Zeitraster, z.B. alle 300ms, ausgeführt werden. Eine zyklische Task T1, T2 gelangt nur dann regelmäßig alle 300ms zur Ausführung, wenn die Laufzeit der Task T1, T2 selbst nicht mehr als 300ms beträgt und zu dem Zeitpunkt, zu dem diese zyklische Task T1, T2 wieder gestartet werden müsste, keine andere Task T1, T2 ausgeführt wird.

Die Erfüllung der ersten Bedingung erfolgt mit der Programmierung des Anwenderprogramms, indem für eine Task T1, T2, die in einem festen Zeitraster von z.B. 300ms läuft, keine Aufgaben vorgesehen werden, deren Abarbeitung mehr als 300ms Laufzeit in Anspruch nimmt.

Die Erfüllung der zweiten Bedingung erfolgt nur mittelbar im Zuge der Programmierung, zumal - wie bereits weiter oben erwähnt - der Scheduler das Taskmanagement wesentlich übernimmt. Die Programmierung oder das Programm bildet allerdings mit der durchdachten Zuweisung von Prioritäten, die für den Scheduler ein Maß für die Rangfolge bei der Ausführung konkurrierender Tasks T1, T2 sind, die Grundlage dafür, dass eine Ausführung der jeweiligen Task T1, T2 im beabsichtigten Zeitraster auch tatsächlich möglich ist.

Exemplarisch wird hier der Fall beschrieben, bei dem einer laufzeitintensiven Eingabetask eine höhere Priorität zugewiesen wird, als einer wichtigen zyklischen Alarmtask und daher der Aufruf der Alarmtask in ihrem Zeitraster nicht möglich ist. Obwohl die Aufrufzeitpunkte der Alarmtask immer wieder erreicht werden, gelangt die Alarmtask aufgrund ihrer geringeren Priorität solange nicht zu Ausführung, wie die Eingabetask mit höherer Priorität ausgeführt wird.

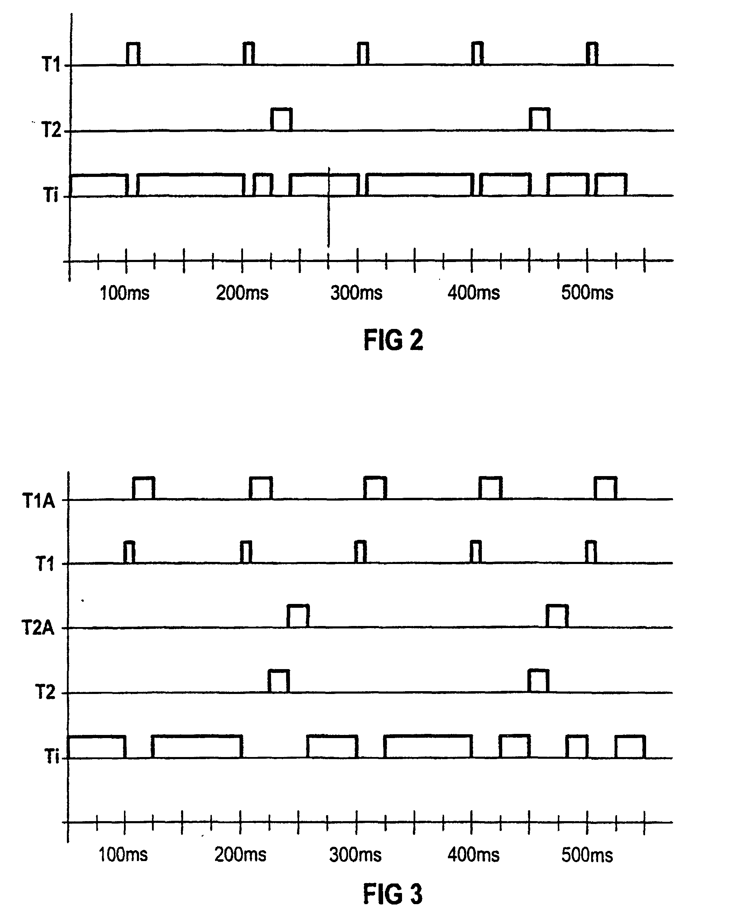

FIG 2 zeigt den zeitlichen Verlauf der Abarbeitung eines zyklischen (Anwender-)Programms Ti mit zwei Tasks T1, T2. Die Tasks T1, T2 laufen in einem festen Zeitraster, wobei die Task T1 alle 100ms und die Task T2 alle 225ms zur Ausführung gelangt. Auch das zyklische Programm Ti kann als Task, z.B. als Task ohne festes Zeitraster, aufgefasst werden. Die Zyklizität des Programms Ti ist in FIG 2 graphisch durch den "Neustart" des Programms Ti beim Zeitpunkt t+275ms angedeutet.

Um sicherzustellen, dass eine Task T1, T2, die für einen Ablauf in einem festen Zeitraster vorgesehen ist, tatsächlich auch jeweils zu den durch das Zeitraster vorgegebenen Startzeitpunkten gestartet wird, sind den Tasks T1, T2 Prioritäten zuweisbar, wobei eine höhere Priorität einer Task deren bevorzugte Bearbeitung durch den Prozessor zur Folge hat. Die Koordination der Tasks erfolgt durch den Scheduler des Betriebssystems.

Ohne eine Zuweisung von Prioritäten würde mit Hinblick auf die in FIG 2 dargestellte Situation eine einmal gestartete Task Ti permanent - zumindest jedoch bis sie ihr Ende erreicht - ausgeführt werden. Weitere Tasks T1, T2 würden nicht zur Ausführung gelangen, wenn sie nicht direkt von der permanent ausgeführten Task Ti aufgerufen würden. Mit einem solchen direkten Aufruf einer Task T1, T2 aus einer anderen, permanent ausgeführten Task Ti lässt sich jedoch ein festes Zeitraster für die Ausführung der Tasks T1, T2 nicht oder nur schwer realisieren, es sein denn, die Task Ti stellt selbst die volle Funktionalität eines Schedulers zur Verfügung.

Der im Betriebssystem enthaltene Scheduler vereinfacht die Koordination beim Ablauf von Tasks T1, T2, Ti. Dazu werden dem Scheduler jede Task T1, T2, Ti bekannt gemacht und für jede Task T1, T2, Ti Parameter definiert, die Art, Dauer und Reihenfolge ihres Ablaufes festlegen.

Für die in FIG 2 dargestellte Situation wird für die Tasks T1, T2 festgelegt, dass es sich um zyklische Tasks T1, T2 handelt, wobei die Task T1 alle 100ms und die Task T2 alle 225ms aufgerufen werden soll. Zusätzlich wird der Task T1 eine höhere Priorität zugewiesen als der Task T2. Dies ist in FIG 2 durch die Position über der Ordinate graphisch dargestellt. Die Task Ti ist eine zyklische Task ohne festes Zeitraster. Sie wird jedes Mal, wenn sie ihr Ende erreicht, neu gestartet. Die Task Ti hat die niedrigste Priorität.

Wird einer der Zeitpunkte erreicht, zu dem eine der Tasks T1, T2 ausgeführt werden soll - z.B. t+100ms, t+200ms, t+225ms, t+300ms, t+400ms, t+450ms, t+500ms, ... - unterbricht der Scheduler die Ausführung der Task Ti und sorgt dafür, dass die jeweilige Task T1, T2 zur Ausführung gelangt.

Zum Zeitpunkt t+900ms müsste gemäß dem gewählten Beispiel gleichzeitig sowohl die Task T1 - 100ms-Raster - wie auch die Task T2 - 225ms-Raster - zur Ausführung kommen. Dies ist nicht möglich, da der Prozessor nicht die Anweisungen der ersten Task T1 zeitgleich mit den Anweisungen der zweiten Task T2 ausführen kann. Da der Task T1 eine höhere Priorität als der Task T2 zugewiesen wurde, gelangt in diesem Zeitpunkt und in vergleichbaren Zeitpunkten zunächst die höherpriore Task T1 und unmittelbar danach die Task T2 zur Ausführung. Erst nachdem auch die Task T2 beendet wurde, wird wieder zur Task Ti zurückgeschaltet.

Aus dieser Konstellation ist ersichtlich, dass auch für den Fall, dass eine Task T1, T2 für einen Ablauf in einem festen Zeitraster vorgesehen ist, deren tatsächlicher Ablauf in dem vorgesehenen Zeitraster systemimmanent nicht in jedem Falle sichergestellt werden kann. Darum ist eine Verschiebung der Startzeitpunkte einzelner Tasks T1, T2 in gewissen Grenzen tolerierbar.

FIG 3 veranschaulicht, in welcher Weise, d.h. zu welchen Zeitpunkten, die den Tasks T1, T2 zugeordneten Aufdattasks T1A, T2A zur Ausführung gelangen. Dabei sind die Tasks T1, T2 gemäß FIG 2 erneut dargestellt. Zusätzlich sind die der Task T1 zugeordnete Aufdattask T1A und die der Task T2 zugeordnete Aufdattask T2A dargestellt. Zur Vereinfachung sollen die Tasks T1, T2, T1A, T2A zu jedem dargestellten Aufrufzeitpunkt jeweils gleiche Laufzeiten aufweisen. Jedoch können die Laufzeiten der Tasks T1, T2, T1A, T2A von Aufrufzeitpunkt zu Aufrufzeitpunkt auch differieren.

Die der Task T1 zugeordnete Aufdattask T1A hat eine höhere Priorität als die Task T1 selbst. Dadurch ist gewährleistet, dass die Aufdattask T1A möglichst unmittelbar im Anschluss an die Ausführung der Task T1 ausgeführt wird. Dies gilt analog für die der Task T2 zugeordnete Aufdattask T2A.

Aus FIG 3 ist ersichtlich, dass für den gewählten Ausschnitt des Zeitstrahls gerade eine Konstellation gegeben ist, bei der die Laufzeiten der Tasks T1, T1A, T2, T2A die Ausführung der zyklischen Tasks T1, T2 zu deren jeweiligen Startzeitpunkten - alle 100ms bzw. alle 225ms - nicht stört. Die für die Ausführung der Aufdattasks T1A, T2A benötigte Zeit geht vollständig "zu Lasten" der Task Ti. Dies ist daran ersichtlich, dass der Zeitpunkt für den Neustart der Task Ti im Gegensatz zu FIG 2 vom Zeitpunkt t+275ms auf den Zeitpunkt t+525ms verschoben ist. Diese Verlängerung einzelner Zyklen des Anwenderprogramms wird nicht als kritisch aufgefasst, da dessen Zykluszeit ohnehin in den seltensten Fällen konstant ist und je nach für die einzelnen Tasks T1, T2 ohnehin erforderlicher Laufzeit differiert.

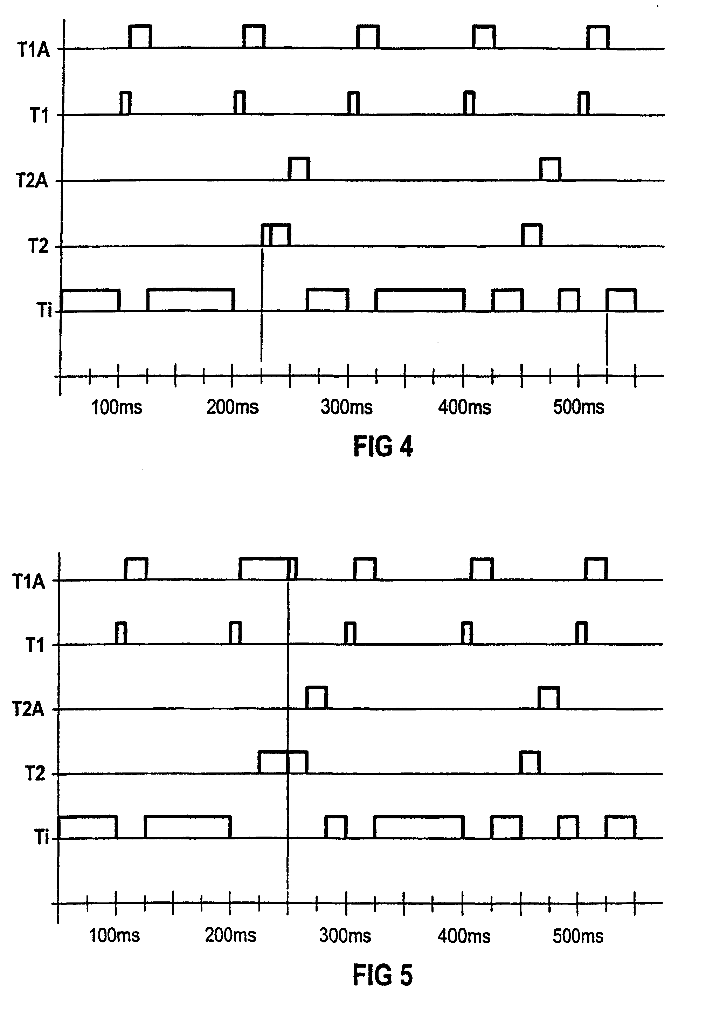

Eine "kritische" Situation liegt erst dann vor, wenn die Ausführung einer Aufdattask T1A den Start einer zyklischen, in einem festen Zeitraster laufenden Task T2 zu dessen vorbestimmten Startzeitpunkt in Frage stellt. Eine derartige Konstellation ist in FIG 4 dargestellt.

Die Laufzeit der Aufdattask T1A zum Zeitpunkt t+200ms ist in FIG 4 gegenüber FIG 3 geringfügig länger. Dadurch wird die Aufdattask T1A zum Zeitpunkt t+225ms, d.h. zu dem Zeitpunkt, zu dem eigentlich die Task T2 gestartet werden müsste, noch ausgeführt. Da die Aufdattask T1A eine höhere Priorität als die Task T2 hat, wird die Aufdattask T1A nicht unterbrochen, obwohl der Startzeitpunkt der Task T2 erreicht ist. Die Task T2 gelangt erst zur Ausführung, wenn die Ausführung der Aufdattask T1A abgeschlossen wurde. Damit liegt jetzt eine Konstellation vor, bei der die Task T2 aufgrund der Ausführung der Aufdattask T1A nicht mehr im eigentlich vorgesehenen festen Zeitraster ausgeführt werden kann.

Wie bereits erwähnt, kann die Konstellation, nämlich dass ein festes Zeitraster nicht exakt eingehalten werden kann, auch in Abwesenheit der Aufdattasks T1A, T2A eintreten. Geringfügige Verschiebungen der Aufrufzeitpunkte der zyklischen Tasks T1, T2 sind daher stets tolerierbar und werden häufig nicht bemerkt. Welche Verschiebungen der Aufrufzeitpunkte der einzelnen zyklischen Tasks T1, T2 im Einzelfall tolerierbar sind, lässt sich nicht im vorhinein festlegen. Statt dessen ist bei der Entwicklung des Programms zur Steuerung und/oder Überwachung des jeweiligen technischen Prozesses TP die Größe der maximal tolerierbaren Verschiebungen gemäß der erforderlichen zeitlichen Abfolge beim Aufruf der einzelnen Tasks T1, T2 und besonders im Hinblick auf die Erfordernisse des zu steuernden und/oder zu überwachenden technischen Prozesses TP festzulegen.

Eine Verschiebung eines Aufrufzeitpunktes einer zyklischen Task um einige 100ms kann bei einem langsamen Prozess, der von einem Programm mit wenigen, weitgehend zeitunkritischen Tasks gesteuert wird, durchaus tolerierbar sein, bei einem schnellen, zeitkritischen Prozess jedoch bereits nachteilige Folgen zeitigen. Festgelegt wird somit die Maximallaufzeiten t1l, t2l, die Obergrenze für die Summe der Laufzeit der Task T1, T2 und zugeordneter Aufdattask T1A, T2A.

Dies ist programmiertechnisch kein grundsätzlich anderer Arbeitsschritt als die Festlegung der Aufrufzeitpunkte - des Zeitrasters - der zyklischen Tasks T1, T2 oder deren Prioritäten, die auch im wesentlichen auf die Situation des jeweiligen technischen Prozesses TP abzustellen sind und damit gleichfalls nicht im vorhinein festlegbar sind. Die Maximallaufzeit t1l könnte also auf den Wert 50ms festlegt werden. Diese Maximallaufzeit t1l ist bei der Konstellation gemäß FIG 4 nicht erreicht. Die Aufdattask T1A würde demnach nicht abgebrochen. Solange während eines Aufdatvorganges keine Aufdattask T1A, T2A unterbrochen wird, wird der Aufdatvorgang auch insgesamt fortgesetzt.

In FIG 5 ist eine Konstellation dargestellt, bei der die Summenlaufzeit t1, d.h. die Summe der Laufzeiten der Task T1 sowie der zugeordneten Aufdattask T1A, die festgelegte Maximallaufzeit t1l von z.B. 50ms überschreiten würde. Bei dieser Konstellation wird die Ausführung der Aufdattask T1A unterbrochen, indem die Aufdattask T1A terminiert wird.

Die Überwachung der Maximallaufzeiten t1l, t2l erfolgt z.B. durch eine dafür vorgesehene Überwachungstask mit entsprechend hoher Priorität. Diese läuft in einem derart engen Zeitraster ab, dass eine Überwachung der Summenlaufzeiten t1, t2 und eine Erkennung des Überschreitens der Maximallaufzeiten t1l, t2l möglich ist.

Durch das Terminieren der Aufdattask T1A wird gewährleistet, dass die Ausführung der zyklischen Task T2 nicht unzulässig verzögert wird. Mit dem Terminieren der Aufdattask T1A wird die "wartende" Task T2 diejenige lauffähige Task mit der derzeit höchsten Priorität. Diese wird daher vom Scheduler unmittelbar zur Ausführung vorgesehen. Auch während des Aufdatens können damit bestimmte Reaktionszeiten eingehalten oder sichergestellt werden, d.h. Zeiten, in denen auf bestimmte Änderungen im technischen Prozess TP, z.B. die Änderungen eines in einen Regelvorgang einfließenden Messwertes, reagiert werden kann.

Wird während des zweiten Durchlaufes - also während des Abschnittes des Aufdatens, in dem der Transfer des Speicherinhaltes mittels der Aufdattasks T1A, T2A erfolgt - eine Aufdattask T1A, T2A aufgrund des Überschreitens der Laufzeitobergrenze t1l, t2l terminiert, so wird der zweite Durchlauf insgesamt abgebrochen und erneut - ggf. nach Verstreichen einer vorgegebenen oder vorgebbaren "Relaxationszeit" von z.B. einer Minute - gestartet.

Das Aufdaten gilt insgesamt nur dann als erfolgreich abgeschlossen, wenn während des zweiten Durchlaufes sämtliche Aufdattasks T1A, T2A ohne Überschreitung der Laufzeitobergrenze t1l, t2l abgearbeitet werden, also sich dadurch selbst terminieren, dass sie ihr Programmende erreichen und in einem abschließenden Schritt der Inhalt eines speziellen Speicherbereiches, auf den das Anwenderprogramm während des Aufdatens zugreift, transferiert wird.

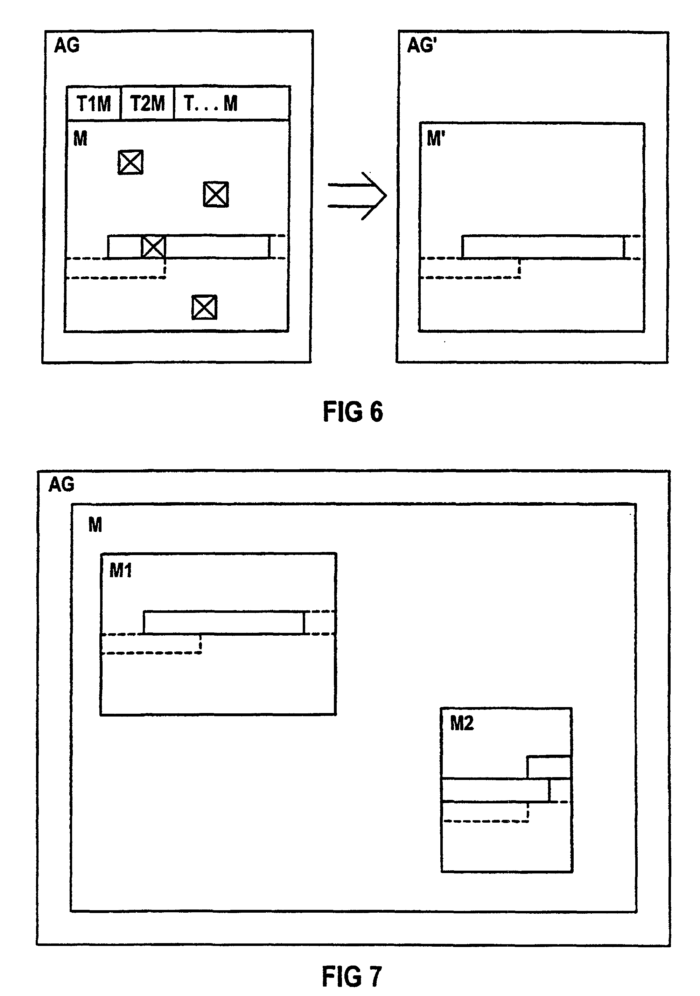

Nunmehr erfolgt das Aufdaten des Backupautomatisierungsgerätes AG', indem zunächst der Inhalt des Speichers M des Automatisierungsgerätes AG sukzessive ausgelesen und durch Einschreiben in den Speicher M' des Backupautomatisierungsgerätes AG' an dieses übertragen wird. Dieser erste Durchlauf des Aufdatvorganges ist in FIG 6 dargestellt.

Gemäß FIG 6 wird der Inhalt des Speichers M sukzessive ausgelesen und in den Speicher M' des Backupautomatisierungsgerätes AG' übertragen. Dies ist durch den strichliniert oder durchgehend umrandeten Ausschnitt des Speichers M angedeutet. Die Übertragung erfolgt über die zwischen Automatisierungsgerät AG und Backupautomatisierungsgerät AG' vorgesehene kommunikative Verbindung B, z.B. einen Bus. Dies ist in FIG 6 durch einen Pfeil angedeutet.

Mit diesem Schritt ist ein "Grunddatenbestand" an das Backupautomatisierungsgerät AG' übertragen. Dieser Grunddatenbestand umfasst z.B. das auf dem Automatisierungsgerät AG ablaufende Anwenderprogramm sowie das sogenannte Peripherieoder Prozessabbild des technischen Prozesses TP und ferner evtl. gewisse nicht ständiger Veränderung unterworfene Daten (z.B. Betriebsparameter, Rezeptdaten, etc.) des Anwenderprogramms.

Da während des Aufdatens - also auch während der Übertragung des "Grunddatenbestandes" - die Führung des technischen Prozesses TP durch das Automatisierungsgerät AG unverändert aufrechterhalten wird, finden kontinuierliche Veränderungen des Inhalts des Speichers M statt. Diese Veränderungen im Speicher M sind in FIG 6 durch die ausgekreuzten Bereiche im Speicher M dargestellt.

Beim Transfer des "Grunddatenbestandes" werden alle Veränderungen, die "vor" dem Abschnitt, der gerade ausgelesen und transferiert wird, berücksichtigt, da der Abschnitt, in dem diese Veränderungen aufgetreten sind, genau wie alle vorherigen Abschnitte ausgelesen und komplett transferiert wird. In FIG 6 ist dies ein Bereich, der vor dem gerade transferierten Bereich liegt. Die weiteren drei in FIG 6 dargestellten veränderten Bereiche konnten bei der Übertragung des Grunddatenbestandes nicht berücksichtigt werden, da die entsprechenden Veränderungen erst wirksam wurden, nachdem die Inhalte der betreffenden Abschnitte übertragen worden sind. Ein mehrmaliges Wiederholen des Transfers des Grunddatenbestandes in der beschriebenen Art und Weise bringt hier keinen besseren Erfolg, da die Veränderungen im Speicher M kontinuierlich, aber nicht deterministisch erfolgen.

Als ergänzender Aufdatdurchlauf, der in der Lage ist, auch während des Aufdatens erfolgende Änderungen des Inhalts des zu transferierenden Speichers M zu berücksichtigen, wird jetzt ein Durchlauf mit einer jeder Task T1, T2 des Anwenderprogramms zugeordneten Aufdattask T1A, T2A gestartet.

Wie aus FIG 7 ersichtlich ist, greift eine Task T1, T2 nicht auf den gesamten Speicher M, sondern nur auf einen Ausschnitt M1, M2 des Speichers M des Automatisierungsgerätes AG zu. Der Ausschnitt M1, M2, auf den die jeweilige Task T1, T2 zugreift, wird von der jeweils zugeordneten Aufdattask T1A, T2A sukzessive - in einer dem Transfer des Grunddatenbestandes im ersten Aufdatdurchlauf vergleichbaren Weise - ausgelesen (angedeutet durch die unterschiedlich umrandeten Bereiche im jeweiligen Ausschnitt M1, M2) und in den (nicht dargestellten) Speicher M' des Backupautomatisierungsgerätes AG' übertragen. Dabei werden zusätzliche Positionsinformationen herangezogen, die die Position eines gerade gelesenen Bereiches eines Ausschnittes M1, M2 bezogen auf den Speicher M angeben und mit denen gewährleistet wird, dass der Inhalt des gerade gelesenen Bereiches auch im Speicher M' an entsprechende Adressen geschrieben wird.

Auch wenn mittels der Aufdattask T1A, T2A der Transfer des Inhalts des Teils des Speichers M1, M2, auf den die jeweilige Task T1, T2 zugreift, grundsätzlich sukzessive erfolgt, erfolgt dieser sukzessive Transfer innerhalb eines Aufrufes der Aufdattask T1A, T2A. Im Programmcode der Aufdattask T1A, T2A kann auch vorgesehen sein, dass der Transfer des Inhalts des Speicherausschnittes M1, M2 vollständig mit einem Lese- und einem Schreibvorgang erfolgt.

Damit die Aufdattask T1A, T2A in die Lage versetzt wird, ausschließlich den Inhalt des Teils des Speichers M1, M2, auf den die jeweilige Task T1, T2 zugreift, zu transferieren, sind innerhalb der Aufdattask T1A, T2A Parameter zur Kennzeichnung des jeweiligen Speicherausschnittes M1, M2 - üblicherweise als Offset und Größe oder auch als Start- und Endadresse - bekannt. Diese Parameter können beim Programmieren mit den jeweiligen Werten belegt werden.

Alternativ ist auch ein Verfahren denkbar, bei dem für jede Task T1, T2 deren Zugriffe auf den Speicher M in einem Protokollspeicher T1M, T2M protokolliert werden und die Aufdattask T1A, T2A denjenigen Teil des Speichers M1, M2 transferiert, der anhand des Inhalts des jeweiligen Protokollspeichers T1M, T2M als zu transferieren erkennbar ist. Dies vermeidet das ggf. fehlerträchtige Erfordernis, die Parameter für den zu berücksichtigenden Speicherausschnitt M1, M2 beim Programmieren festlegen zu müssen und hat zudem den Vorteil, dass die Aufdattask T1A, T2A nicht den gesamten Inhalt des Speicherausschnittes M1, M2 transferieren muss, sondern nur denjenigen Teil, der tatsächlich verändert wurde.

Mit der schematischen Darstellung des Protokollspeichers T1M, T2M in FIG 6 ist veranschaulicht, dass der Protokollspeicher T1M, T2M außerhalb des Speichers M liegt, dessen Inhalt an das redundante Automatisierungsgerät AG' zu übertragen ist, zumal ein Transfer des Inhalt des Protokollspeichers T1M, T2M nicht erforderlich ist. Der Protokollspeicher T1M, T2M wird als Teil des Speichers M realisiert sein, so dass die aus in FIG 6 vorgenommene Trennung zwischen Speicher M und Protokollspeicher T1M, T2M nur der Übersichtlichkeit dient. Der zu transferierende Bereich des Speichers M wird dann durch eine Start- und Endadresse oder eine Startadresse und ein ab dieser Startadresse zu übertragendes Datenvolumen angegeben. Nicht zu transferierende Speicherinhalte, wie z.B. die Inhalte der besagten Protokollspeicher T1M, T2M, können dann außerhalb des auf diese Weise vorgesehenen Bereiches liegen.

Wenn während des zweiten Aufdatdurchlaufes keine der Aufdattasks T1A, T2A aufgrund des Überschreitens der Laufzeitobergrenze t1l, t2l terminiert wird, gilt das Aufdaten - vorbehaltlich des noch abzuwickelnden Transfers des Inhalts des speziellen Speicherbereiches, auf den das Anwenderprogramm während des Aufdatens zugreift, - als erfolgreich beendet. Der Inhalt des Speichers M' des Backupautomatisierungsgerätes AG' entspricht dem Inhalt des Speichers M des Automatisierungsgerätes AG.

Durch ein Signal vom Automatisierungsgerät AG an das Backupautomatisierungsgerät AG' kann diesem angezeigt werden, dass das Aufdaten erfolgreich abgeschlossen ist. Wenn im Backupautomatisierungsgerät AG' daraufhin die Kopie des Anwenderprogramms gestartet wird und das Backupautomatisierungsgerät AG' aufgrund der Kopie des Anwenderprogramms identische Aktionen ausführt wie das Automatisierungsgerät AG' bleibt die Identität der Daten weiterhin gewährleistet. Somit kann das Backupautomatisierungsgerät AG', z.B. im Falle eines notwendig werdenden Austausches des Automatisierungsgerätes AG, sofort die Führung des technischen Prozesses TP übernehmen.

Der Transfer der Inhalte der jeweiligen Speicherausschnitte M1, M2 mittels der Aufdattasks erweist sich als vorteilhaft, weil eine Veränderung der Inhalte der Speicherausschnitte nur während der Laufzeit der jeweiligen Tasks T1, T2, nicht jedoch während der Laufzeit der Aufdattasks T1A, T2A möglich ist. Die Aufdattasks T1A, T2A können daher die Inhalte der jeweiligen Speicherausschnitte M1, M2 stets komplett transferieren, so dass am Ende der Aufdattask T1A, T2A sichergestellt ist, dass der Inhalt des jeweiligen Speicherausschnittes M1, M2 komplett übertragen wurde, ohne dass zwischenzeitliche Änderungen im Inhalt dieses Speicherausschnittes einen erneuten Transfer erforderlich machen würden.

Nachfolgend wird ein Sonderfall beschrieben, der aus den bisherigen Ausführungen, insbesondere im Zusammenhang mit FIG 3, ersichtlich ist. Gemäß FIG 3 wird - ausgehend vom Zeitpunkt t+0ms - die Aufdattask T1A zweimal aufgerufen und komplett ausgeführt, bevor die Aufdattask T2A das erste mal aufgerufen wird. Nachdem das Aufdaten (im wesentlichen) als erfolgreich ausgeführt gilt, wenn sämtliche Aufdattasks T1A, T2A komplett ausgeführt werden konnten, muss die Tatsache der kompletten Ausführung der jeweiligen Aufdattasks T1A, T2A abgespeichert werden. In der Konstellation gemäß FIG 3 würde für die Aufdattask T1A etwa im Zeitpunkt t+125ms ein "flag" gesetzt, das die komplette Ausführung der Aufdattask T1A kennzeichnet. Im Zeitpunkt t+250ms würde ein entsprechendes flag für die Aufdattasks T2A gesetzt. Da keine weiteren Aufdattasks T1A, T2A vorhanden sind, gilt der Aufdatdurchlauf damit als erfolgreich beendet. Der zweite Aufdatdurchlauf ist etwa im Zeitpunkt t+250ms abgeschlossen. Ein nochmaliges Starten der Aufdattasks T1A, T2A ist nicht erforderlich, auch wenn dies in FIG 3, 4 und 5 entsprechend dargestellt ist.

Eine eine Sonderbehandlung erfordernde Konstellation tritt allerdings dann auf, wenn vor Beendigung des zweiten Aufdatdurchlaufes eine Aufdattask T1A, T2A nach einem einmal erfolgten kompletten Durchlauf erneut gestartet wird. Eine derartige Konstellation ist in FIG 5 dargestellt. Im Zeitpunkt t+125ms ist die Aufdattask T1A abgearbeitet und ein entsprechendes flag würde gesetzt. Im Zeitpunkt t+250ms wird - weil der zweite Aufdatdurchlauf noch nicht abgeschlossen ist - die erneut aufgerufene Aufdattask T1A terminiert, da die vorgegebene Laufzeitobergrenze t1l überschritten wird. Im Zeitpunkt t+275ms wird für die dann abgearbeitete Aufdattask T2A das entsprechende flag gesetzt.

Auch hier wären beide flags gesetzt, nämlich für die Aufdattasks T1A von deren erstmaligem Aufruf und für die Aufdattasks T2A von deren einzigem Aufruf, und der Aufdatdurchlauf müsste damit als erfolgreich abgeschlossen gelten. Tatsächlich wurde allerdings die Aufdattask T1A terminiert, bevor diese den Inhalt des gesamten Ausschnittes M1 des Speichers M, auf den die zugehörige Task T1 zugreift, transferieren konnte. Es sind also eventuell nicht sämtliche Änderungen im Speicherausschnitt M1 transferiert worden, so dass das Aufdaten in einer solchen Konstellation nicht als abgeschlossen gelten kann.

Die erforderliche Sonderbehandlung lässt sich jedoch einfach damit erreichen, dass das der jeweiligen Aufdattask T1A, T2A zugeordnete flag bei jedem neuen Aufruf derjenigen Task T1, T2, der die jeweilige Aufdattask T1A, T2A zugeordnet ist, zurückgesetzt wird. Für die oben beschriebene Konstellation bedeutet dies, dass das flag der Aufdattask T1A zum Zeitpunkt t+125ms gesetzt und zum Zeitpunkt t+200ms zurückgesetzt wird. Auch wenn jetzt im Zeitpunkt t+275ms das flag der Aufdattask T2A gesetzt wird, gilt das Aufdaten nicht als abgeschlossen, da das flag der Aufdattask T1A fehlt. Tatsächlich gilt das Aufdaten erst zum Zeitpunkt t+375ms als abgeschlossen, d.h. zum frühesten Zeitpunkt, zu dem erstmalig das flag der Aufdattask T1A wieder gesetzt ist, das flag der Aufdattask T2A aber noch nicht wieder zurückgesetzt ist.

Für den Fall, dass gemäß der oben bereits beschriebenen vorteilhaften Ausgestaltung der Erfindung der Protokollspeicher T1M, T2M zur Anwendung kommt, ist nach jeder kompletten Ausführung einer Aufdattask T1A, T2A der Inhalt des jeweiligen Protokollspeichers T1M, T2M zurückzusetzen oder als ungültig zu markieren.
Ein weiterer Aspekt der Erfindung beschäftigt sich mit der Situation, bei der eine spezielle Task, eine für spezielle Fehlerbehandlungen bzw. Fehlerreaktionen vorgesehene F-Task, mit niedriger Priorität durch die Summe der Laufzeiten der Aufdattasks T1A, T2A nicht mehr in dem eigentlich vorgesehenen festen Zeitraster ausgeführt werden kann, da aufgrund der niedrigen Priorität der F-Task lauffähige Tasks T1, T2 mit höherer Priorität und deren zugeordnete Aufdattasks T1A, T2A "bevorzugt" ausgeführt werden.

Für eine solche Konstellation ist gemäß dieses Aspektes vorgesehen, dass die Aufdattask T1A, T2A einer Task T1, T2 mit höherer Priorität, vorzugsweise die Aufdattask T1A derjenigen Task T1 mit der höchsten Priorität vor ihrer eigenen Ausführung kurzfristig die Priorität der F-Task auf einen Wert, der deren sofortige Ausführung - unter entsprechender Verdrängung der Aufdattask T1A - zur Folge hat, setzt. Auf diese Weise wird gewährleistet, dass auch beim Aufdaten das Reaktionsverhalten spezieller niederpriorer F-Task vorhersagbar bleibt, da deren Aufruf durch die zusätzliche Ausführung der Aufdattasks T1A, T2A nicht länger als tolerierbar verzögert wird.

Somit ist ein Automatisierungsgerät mit einem taskorientierten Anwenderprogramm bereitgestellt, dessen Speicherinhalt ohne Unterbrechung des Betriebs an ein redundantes Automatisierungsgerät zu übertragen ist. Nach einem herkömmlichen Transfer eines Grunddatenbestandes erfolgt der Transfer zwischenzeitlich geänderter Daten mittels den einzelnen Tasks zugeordneter Aufdattasks, wobei die Aufdattasks nur denjenigen Ausschnitt des Speicherinhaltes übertragen, auf den die jeweilige Task zugreift.

### Bezugszeichenliste

- AG,AG': Automatisierungsgerät
- B: Verbindung
- M,M': Speicher
- T1,2: Task
- T1A,T2A: Aufdattask
- Ti: (Anwender-)Programm/Task

## Patentansprüche

1. Automatisierungsgerät (AG) zur Steuerung und/oder Überwachung eines technischen Prozesses (TP),
- mit einem Speicher (M) zur Speicherung zumindest eines Anwenderprogramms (Ti) mit mindestens einer Task (T1, T2) sowie prozess- und anwenderprogrammbezogener Daten,
- wobei beim Ankoppeln eines redundanten Automatisierungsgerätes (AG') ein Transfer des Inhalts des Speichers (M) in einen Speicher (M') des redundanten Automatisierungsgerätes (AG') erfolgt,
**dadurch gekennzeichnet,**
- **dass** jeder Task (T1, T2) zum Transfer des Inhalts eines Teils (M1, M2) des Speichers (M), auf den die jeweilige Task (T1, T2) zugreift, eine Aufdattask (T1A, T2A) zugeordnet ist, und
- **dass** eine Terminierung der Aufdattask (T1A, T2A) erfolgt, wenn die Laufzeit von Task (T1, T2) und Aufdattask (T1A, T2A) eine vorgegebene oder vorgebbare Laufzeitobergrenze (t1l, t2l) überschreitet.

2. Automatisierungsgerät nach Anspruch 1, bei dem für jede Task (T1, T2) eine Protokollierung der jeweiligen Zugriffe auf den Speicher (M) in einem Protokollspeicher (T1M, T2M) erfolgt, wobei mittels der Aufdattask (T1A, T2A) der Transfer desjenigen Teils (M1, M2) des Speichers (M) erfolgt, der anhand des Inhalts des jeweiligen Protokollspeichers (T1M, T2M) als zu transferieren erkennbar ist.

3. Automatisierungsgerät nach Anspruch 1 oder 2, bei dem der Aufdattask (T1A, T2A) eine höhere Priorität zugewiesen ist, als derjenigen Task (T1, T2), der die jeweilige Aufdattask (T1A, T2A) zugeordnet ist.

4. Verfahren zum Aufdaten eines mit einem Automatisierungsgerät (AG) kommunikativ verbundenen redundanten Automatisierungsgerätes (AG') während der Steuerung und/oder Überwachung eines technischen Prozesses (TP), wobei jedes Automatisierungsgerät (AG, AG') jeweils einen Speicher (M, M') aufweist, wobei im Speicher (M) des Automatisierungsgerätes (AG) zumindest ein Anwenderprogramm (Ti) mit mindestens einer Task (T1, T2) sowie prozess- und anwenderprogrammbezogene Daten gespeichert sind, und wobei in einem ersten Aufdatdurchlauf ein sukzessiver Transfer des Inhalts des Speichers (M) des Automatisierungsgerätes (AG) in den Speicher (M') des redundanten Automatisierungsgerätes (AG') erfolgt, **dadurch gekennzeichnet, dass** in einem zweiten Aufdatdurchlauf mittels einer der jeweiligen Task (T1, T2) zugeordneten Aufdattask (T1A, T2A) der Inhalt des Teils (M1, M2) des Speichers (M), auf den die Task (T1, T2) zugreift, in den Speicher (M') des redundanten Automatisierungsgerätes (AG') transferiert wird, wobei die Aufdattask (T1A, T2A) terminiert wird, wenn die Laufzeit von Task (T1, T2) und Aufdattask (T1A, T2A) eine vorgegebene oder vorgebbare Laufzeitobergrenze (t1l, t2l) überschreitet.

5. Verfahren nach Anspruch 4, **dadurch gekennzeichnet, dass** jeder Zugriff einer Task (T1, T2) auf den Speicher (M) protokolliert wird und die Aufdattask (T1A, T2A) den anhand der Protokollierung als zu transferierenden erkennbaren Teil (M1, M2) des Speichers (M) transferiert.

6. Verfahren nach Anspruch 4 oder 5, **dadurch gekennzeichnet, dass** der Aufdattask (T1A, T2A) eine höhere Priorität zugewiesen wird, als derjenigen Task (T1, T2), der die jeweilige Aufdattask (T1A, T2A) zugeordnet ist.

7. Verfahren nach einem der Ansprüche 4 bis 6, **dadurch gekennzeichnet, dass** der zweite Aufdatdurchlauf neu gestartet wird, wenn eine Aufdattask (T1A, T2A) aufgrund des Überschreitens der Laufzeitobergrenze (t1l, t2l) terminiert wurde.

8. Verfahren nach Anspruch 7, **dadurch gekennzeichnet, dass** der zweite Aufdatdurchlauf nach Ablauf einer vorgegebenen oder vorgebbaren Relaxationszeit neu gestartet wird.

## Claims

1. Programmable controller (AG) for controlling and/or monitoring a technical process (TP),
- comprising a memory (M) for storing at least one user program (Ti) comprising at least one task (T1, T2) and process- and user-program-related data,
- where, when a redundant programmable controller (AG') is connected, the content of the memory (M) is transferred into a memory (M') of the redundant programmable controller (AG'),
**characterised in that**
- an updating task (T1A, T2A) is assigned to each task (T1, T2) for transferring the content of a part (M1, M2) of the memory (M) which is accessed by the respective task (T1, T2), and
- the updating task (T1A, T2A) is terminated when the run time of task (T1, T2) and updating task (T1A, T2A) exceeds a predetermined or predeterminable upper run time limit (t1l, t2l).

2. Programmable controller according to Claim 1, in which for each task (T1, T2) the respective accesses to the memory (M) are logged in a log memory (T1M, T2M), where the updating task (T1A, T2A) transfers that part (M1, M2) of the memory (M) which can be recognised as to be transferred according to the content of the respective log memory (T1M, T2M).

3. Programmable controller according to Claim 1 or 2, in which the updating task (T1A, T2A) is assigned a higher priority than the task (T1, T2) to which the respective updating task (T1A, T2A) is assigned.

4. Method for updating a redundant programmable controller (AG'), which is communicatively connected to a programmable controller (AG), during the control and/or monitoring of a technical process (TP), each programmable controller (AG, AG') in each case having a memory (M, M'), at least one user program (Ti) with at least one task (T1, T2) and process- and user-program-related data being stored in the memory (M) of the programmable controller (AG) and the content of the memory (M) of the programmable controller (AG) being sequentially transferred into the memory (M') of the redundant programmable controller (AG') in a first updating pass, **characterised in that**, in a second updating pass, the content of the part (M1, M2) of the memory (M) which is accessed by the task (T1, T2) is transferred into the memory (M') of the redundant programmable controller (AG') by means of an updating task (T1A, T2A) assigned to the respective task (T1, T2), the updating task (T1A, T2A) being terminated when the run time of task (T1, T2) and updating task (T1A, T2A) exceeds a predetermined or predeterminable upper run time limit (t1l, t2l).

5. Method according to Claim 4, **characterised in that** each access by a task (T1, T2) to the memory (M) is logged and the updating task (T1A, T2A) transfers the part (M1, M2) of the memory (M) which can be recognised on the basis of the logging as having to be transferred.

6. Method according to Claim 4 or 5, **characterised in that** the updating task (T1A, T2A) is assigned a higher priority than the task (T1, T2) to which the respective updating task (T1A, T2A) is assigned.

7. Method according to one of claims 4 to 6, **characterised in that** the second updating pass is restarted when an updating task (T1A, T2A) has been terminated due to the upper run time limit (t1l, t2l) being exceeded.

8. Method according to Claim 7, **characterised in that** the second updating pass is restarted after a predetermined or predeterminable relaxation time has elapsed.

## Revendications

1. Appareil (AG) d'automatisation pour la commande et/ou le contrôle d'un processus (TP) technique,
- comprenant une mémoire (M) de mise en mémoire d'au moins un programme (T1) utilisateur ayant au moins une tâche (T1, T2), ainsi que des données se rapportant au processus et au programme utilisateur
- dans lequel, lors du couplage d'un appareil (AG') redondant d'automatisation, il s'effectue un transfert du contenu de la mémoire (M) dans une mémoire (M ') de l'appareil redondant d'automatisation
**caractérisé**
- **en ce qu'**il est associé à chaque tâche (T1, T2), pour le transfert du contenu d'une partie (M1, M2) de la mémoire (M), à laquelle la tâche (T1, T2) respective accède, une tâche (T1A, T2A) de mise à jour et
- **en ce qu'**il est mis fin à la tâche (T1A, T2A) de mise à jour lorsque la durée de déroulement de la tâche (T1, T2) et de la tâche (T1A, T2A) de mise à jour a dépassé une limite (T11, T21) supérieure, donnée à l'avance ou pouvant être prescrite, du temps de déroulement.

2. Appareil d'automatisation selon la revendication 1, dans lequel pour chaque tâche (T1, T2) il s'effectue un relevé des accès respectifs à la mémoire (M), dans une mémoire (T1M, T2M) de relevé, le transfert de la partie (M1, M2) de la mémoire (M), qui peut être reconnue comme étant à transférer au moyen du contenu de la mémoire (T1M, T2M) respectif de relevé, s'effectuant au moyen de la tâche (T1A, T2A) de mise à jour.

3. Appareil d'automatisation selon la revendication 1 ou 2, dans lequel il est affecté à la tâche (T1A, T2A) de mise à jour une priorité plus grande que celle affectée à la tâche (T1, T2) à laquelle est associée la tâche (T1A, T2A) respective de mise à jour.

4. Pièce de mise à jour d'appareil (AG') redondant d'automatisation relié, de manière à communiquer, à un appareil (AG) d'automatisation, pendant la commande et/ou le contrôle d'un processus (TP) technique, chaque appareil (AG, AG') d'automatisation ayant respectivement une mémoire (M, M'), un programme (T1) utilisateur ayant au moins une tâche (T1, T2) ainsi que des données se rapportant au processus et au programme utilisateur étant mémorisés dans la mémoire (M) de l'appareil (AG) d'automatisation et un transfert successif du contenu de la mémoire (M) de l'appareil (AG) d'automatisation à la mémoire (M') de l'appareil (AG') redondant d'automatisation s'effectuant dans un premier passage de mise à jour, **caractérisé en ce que**, dans un deuxième passage de mise à jour, le contenu de la partie (M1, M2) de la mémoire (M), à laquelle la tâche (T1, T2) accède, est transféré au moyen de l'une des tâches (T1A, T2A) de mise à jour associée à la tâche (T1, T2) respective à la mémoire (M') de l'appareil (AG') redondant d'automatisation et il est mis fin à la tâche (T1A, T2A) de mise à jour lorsque la durée de déroulement de la tâche (T1, T2) et de la tâche (T1A, T2A) de mise à jour dépasse une limite (T11, T21) supérieure, donnée à l'avance ou pouvant être prescrite, de temps de déroulement.

5. Appareil suivant la revendication 4, **caractérisé en ce que** chaque accès d'une tâche (T1, T2) à la mémoire (M) est relevé et la tâche (T1A, T2A) de mise à jour transmet au moyen du relevé la partie (M1, M2) de la mémoire (M) que l'on peut reconnaître comme étant à transférer.

6. Appareil suivant la revendication 4 ou 5, **caractérisé en ce qu'**il est donné à la tâche (T1A, T2A) de mise à jour une priorité plus grande que celle donnée à la tâche (T1, T2) à laquelle est associée la tâche (T1A, T2A) de mise à jour respective.

7. Appareil suivant les revendications 4 à 6, **caractérisé en ce que** le deuxième passage de mise à jour est recommencé lorsqu'il a été mis fin à une tâche (T1A, T2A) de mise à jour en raison du dépassement de la limite (T11, T21) supérieure de temps de déroulement.

8. Appareil suivant la revendication 7, **caractérisé en ce que** le deuxième passage de mise à jour est recommencé après qu'un temps de relaxation, donné à l'avance ou pouvant être prescrit, est expiré.
